# EUROPÄISCHE PATENTANMELDUNG

(11) **EP 1 033 833 A2**
(43) Veröffentlichungstag der Anmeldung: **06.09.2000**
(21) Anmeldenummer: 00104702.6
(22) Anmeldetag: 03.03.2000
(51) Int. Cl.: H04B 10/08

(54) **Verfahren zur Überwachung des Betriebes von optischen Fasern**

(30) Priorität: 04.03.1999 DE 19909565
(71) Anmelder: SIEMENS AKTIENGESELLSCHAFT, 80333 München (DE)
(72) Erfinder: Jäger, Hubert, Dr., 82049 Pullach (DE); Stortz, GerhardDr., 85586 Poing (DE); Stoll, Detlef,Dr., 81377 München (DE); Johannsen, Reinhard,Dr., 82024 Taufkirchen (DE); Plotz, Wilhelm-Martin, Dr., 1020 Wien (AT)

(57) **Zusammenfassung**

Über zumindest zwei für die Übertragung von optischen Nutzsignalen (osn,osk) zwischen einer zentralen und einer dezentralen, optischen Einrichtung (ZOE,DOE) vorgesehenen, optischen Fasern (FN,FC) wird ein in der zentralen Einrichtung (ZOE) erzeugtes optisches Hilfssignal (oh) zusammen mit einem optischen Nutzsignal (osn) von der zentralen zur dezentralen optischen Einrichtung (ZOE,DOE) übertragen. Das in der dezentralen, optischen Einrichtung (DOE) empfangene, optische Hilfssignal (oh) wird umgelenkt, über eine weitere optische Faser (FN) zusätzlich zu einem zweiten optischen Nutzsignal (osk) zur zentralen, optischen Einrichtung (ZOE) rückübertragen und in der zentralen, optischen Einrichtung (ZOE) der Empfang des optischen Hilfssignals (oh) optisch überwacht.

## Beschreibung

Die Erfindung betrifft ein Verfahren zur Überwachung des Betriebes von optischen Fasern innerhalb eines volloptischen, fasergebundenen Kommunikationsnetzes, wobei für die Übertragung von optischen Nutzsignalen zwischen einer zentralen und einer dezentralen, optischen Einrichtung zumindest zwei optische Fasern vorgesehen sind.

Bei derzeitigen volloptischen, fasergebunden Kommunikationsnetzen, insbesondere bei Ring- oder Doppelstern-Topologie aufweisenden Kommunikationsnetzen, werden die Kommunikationseinrichtungen eines Netzkunden beispielsweise eines Internetproviders mit Hilfe von mehreren optischen Zuleitungsfasern bzw. -faserpaaren an das volloptische Kommunikationsnetz angeschlossen. Über derartige optische Zuleitungsfasern werden üblicherweise Datenmengen im Gigabitbereich übertragen, wobei die Datenübertragung zwischen einer zentralen Einrichtung, d.h. beispielsweise eines Netzknoten des volloptischen Kommunikationsnetzes, und einer dezentralen optischen Einrichtung beispielsweise einem Netzabschlußgerät erfolgt. Bei derartig hohen Datenübertragungsraten wird durch den Netzkunden eine hohe Zuverlässigkeit des volloptischen Kommunikationsnetzes bzw. des Anschlusses an das volloptische Kommunikationsnetz vom Netzbetreiber gefordert. Um nun eine einwandfreie Funktion des Anschlusses der Kommunikationseinrichtungen des Netzkunden an das volloptische Kommunikationsnetz sicherstellen zu können muß dieser fernüberwacht werden. Dies bedeutet, daß im jeweiligen Netzknoten Informationen über den Betriebszustand der optischen Zuleitungsfasern für den jeweiligen Netzanschluß zur Verfügung stehen müssen. Tritt beispielsweise eine Funktionsstörung für den Anschluß eines Netzkunden auf, so ist es dem Netzbetreiber ohne Fernüberwachung des Anschlusses des Netzkunden nicht möglich zu beurteilen, ob die Funktionsstörung in seinem eigenen Zuständigkeitsbereich liegt, etwa weil ein Bagger eine der optischen Zuleitungsfasern beschädigt hat, oder ob der Fehler im Zuständigkeitsbereich des Netzkunden liegt, weil beispielsweise dessen Sendelaser einen Defekt aufweist.

Daher ist es von Vorteil automatisch fernüberwachen zu können, ob Störungen bzw. Unterbrechungen auf optischen Zuleitungsfasern im Verantwortungsbereich des Netzbetreibers liegen oder nicht.

Hierzu ist bereits ein Verfahren zur "Überwachung optischer Einfaser-Anschlußleitungen bis zu einer passiven Schnittstelle" aus DE 4328486 A1 bekannt, bei dem um einen optischen BISDN-Teilnehmeranschluß effektiv überwachen zu können ein durch geträgerte Impulse gegebenes, ursprünglich elektronisches Überwachungssignal von einer Lichtwellenleiter(LWL)-Anschlußeinheit, insbesondere der vermittlungsseitigen Teilnehmer-Anschlußeinheit zu einer definierten passiven optischen Schnittstelle übertragen wird, wobei in der LWL-Anschlußeinheit dem elektrischen Ansteuersignal des dort vorgesehenen optischen Senders dieses Überwachungssignal hinzugefügt wird. Desweiteren wird an der passiven optischen Schnittstelle ein kleiner Teil des von der LWL-Anschlußeinheit her zum Teilnehmer-Anschluß hin übertragenen optischen Signals, d.h. sowohl Nutzsignal als auch Überwachungssignal, abgezweigt und in Rückrichtung zur LWL-Anschlußleitung übertragen, wo es in dem dort vorgesehenen optischen Empfänger ggf. gemeinsam mit dem vom Teilnehmer her empfangenen optischen Signal in ein elektrisches Signal gewandelt wird. Zusätzlich wird in DE 4328486 A1 die Auswertung eines derartig rückgeführten, elektrischen Überwachungssignals zum Zwecke der Überwachung des Teilnehmer-Anschlusses explizit beschrieben. Eine derartiges Überwachungsverfahren ist aber mit unvertretbar hohem technischen Aufwand und damit auch unvertretbaren Kosten verbunden. Desweiteren erfordert es hohen technischen Aufwand die erwünschten Reflexionen an der passiven Schnittstelle von den zusätzlichen Reflexionen an anderen Stellen exakt zu trennen um somit eine hohe Zuverlässigkeit des Überwachungsverfahrens gewährleisten zu können.

Die der Erfindung zugrundeliegende Aufgabe besteht nun darin, die Überwachung des Betriebes von optischen Fasern innerhalb eines volloptischen, fasergebundenen Kommunikationsnetzes, insbesondere die Überwachung mehrerer Zuleitungsfasern zwischen einer zentralen Einrichtung und einer dezentralen Einrichtung insbesondere hinsichtlich des technischen Realisie-rungsaufwandes zu vereinfachen. Die Aufgabe wird ausgehend von einem Verfahren gemäß den Merkmalen des Oberbegriffs des Patentanspruches 1 durch die Merkmale des kennzeichnenden Teils gelöst.

Der wesentliche Aspekt des erfindungsgemäßen Verfahrens ist darin zu sehen, daß ein in der zentralen Einrichtung erzeugtes optisches Hilfssignal zusammen mit einem ersten optischen Nutzsignal über eine der optischen Fasern von der zentralen zur dezentralen optischen Einrichtung übertragen wird und daß das in der dezentralen optischen Einrichtung empfangene, optische Hilfssignal umgelenkt und über eine weitere der optischen Fasern zur zentralen, optischen Einrichtung zusätzlich zu einem zweiten optischen Nutzsignal rückübertragen wird. Desweiteren wird der Empfang des rückübertragenen optischen Hilfssignals in der zentralen, optischen Einrichtung optisch überwacht. Vorteilhaft wird hier ein zusätzliches optisches Hilfsignal im Netzknoten erzeugt und über die komplette Zuleitungsfaser zum Netzabschlußgerät zusätzlich zu einem Nutzsignal übertragen, wobei das Hilfssignal keinen hohen Qualitätsanforderungen genügen muß und somit eine kostengünstige Laserdiode bzw. gegebenenfalls eine Leuchtdiode zu seiner Erzeugung verwendet werden kann. Die Ein- und Auskopplung des Hilfssignals in der zentralen bzw. dezentralen optischen Einrichtung erfolgt besonders vorteilhaft mit optischen Kopplern, so daß eine zusätzliche Wandlung des optischen Hilfssignals in ein elektrisches Signal entfällt. Auch die Umlenkung des optischen Hilfssignals in der dezentralen Einrichtung kann durch eine einfache zusätzliche optische Faser realisiert werden und erfordert somit keinen hohen technischen Aufwand. In anderen Worten das beim Netzkunden installierte Netzabschlußgerät weist einen einfachen, passiven Aufbau auf und ist daher äußerst zuverlässig. Desweiteren wird lokal beim Netzkunden für das Netzabschlußgerät keine externe Speisestromversorung benötigt, wodurch zusästzlich eine Flexibilisierung hinsichtlich der Standortwahl für den Betrieb des Netzabschlußgerätes ergibt. Besonders vorteilhaft wird durch den Empfang des rückübertragenen optischen Hilfssignals in der zentralen optischen Einrichtung ein ordnungsgemäßer Betrieb der optischen Fasern angezeigt.

Vorteilhaft wird zusätzlich zu dem optischen Hilfssignal das zweite optische Nutzsignal zur Überwachung des Betriebszustands der beiden optischen Fasern in der zentralen, optischen Einrichtung ausgewertet wird - Anspruch 2. Hierdurch kann besonders vorteilhaft durch das Fehlen bzw. bei keinem Empfang des rückübertragenen optischen Hilfssignals und bei Empfang des zweiten optischen Nutzsignals in der zentralen optischen Einrichtung ein Faserbruch bzw. eine Übertragungsstörung in der optischen Fasern erkannt werden, über die das erste optische Nutzsignal von der zentralen zur dezentralen Einrichtung übertragen wird.

Nach einer weiteren Ausgestaltung des erfindungsmäßen Verfahrens wird zumindest ein Teil des in der dezentralen, optischen Einrichtung empfangenen Hilfssignals abgeteilt und die im abgeteilten Hilfssignal enthaltene Faserzustandsinformation über den Betriebszustand der zumindest einen optischen Faser in der dezentralen, optischen Einrichtung angezeigt - Anspruch 3. Zusätzlich liegt die Frequenz des optischen Hilfssignals im optisch sichtbaren Frequenzbereich und weist bei der Erzeugung im Netzknoten eine Lichtleistungsintensität kleiner zwei Milliwatt auf - Anspruch 4 und 5. Dies ist mit den Vorteilen verbunden, daß ein Teil des Hilfssignals im Netzabschlußgerät abgeteilt werden kann und unmittelbar dem Netzkunden am Netzabschlußgerät ohne Gefährdung des Augenlichts des Wartungspersonals angezeigt werden kann, d.h. der Netzkunde erhält auf besonders einfache aber effiziente Weise Informationen über den Betriebszustand der Zuleitungsfaser vom Netzknoten zum Netzabschlußgerät und kann diese bei einer auftretenden Funktionsstörung der Zuleitungsfaser dem Netzbetreiber beispielsweise telefonisch mitteilen.

Weitere vorteilhafte Ausgestaltungen des erfindungsgemäßen Verfahrens sind den weiteren Ansprüchen zu entnehmen.

Im folgenden wird das erfindungsgemäße Verfahren anhand von zwei Prinzipschaltbildern näher erläutert.
- Figur 1: zeigt in einem Prinzipschaltbild ein optisches Zuleitungsfasernpaar zwischen einem optischen Netzknoten und dem Netzabschlußgerät eines volloptischen Kommunikationsnetzes, und
- Figur 2: zeigt in einem weiteren Prinzipschaltbild ein optisches Zuleitungsfasernpaar mit 1+1 Leitungsschutz zwischen einem optischen Netzknoten und dem Netzabschlußgerät eines volloptischen Kommunikationsnetzes.

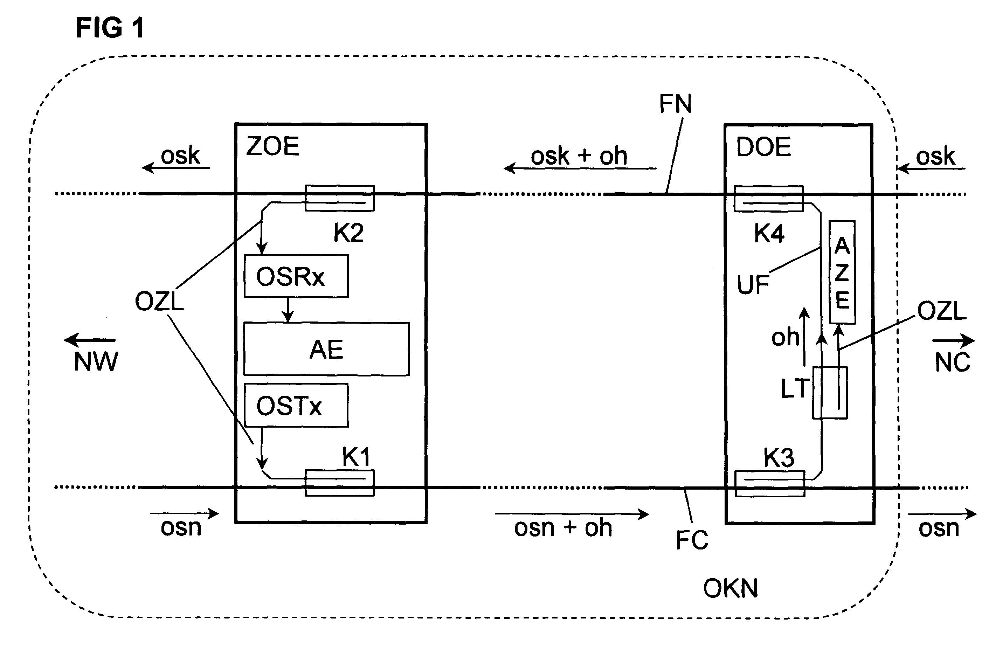

In Figur 1 ist ein volloptisches, fasergebundenes Kommunikationsnetz OKN schematisch dargestellt, das eine zentrale, optische Einrichtung ZOE, beispielsweise einen optischen Netzknoten und eine dezentrale, optische Einrichtung DOE, beispielsweise ein Netzabschlußgerät aufweist. In dem Prinzipschaltbild nach Figur 1 ist beispielsweise nur einer einer Mehrzahl von Netzknoten ZOE und nur eines einer Mehrzahl von Netzabschlußgeräten DOE des volloptischen, fasergebundenen Kommunikationsnetzes OKN dargestellt. Der Netzknoten ZOE und das Netzabschlußgerät DOE sind über eine erste, zur Übertragung von Daten von einem optischen Netzwerk NW - beispielsweise in Ring- oder Doppelsterntopologie ausgestaltet - zu einem Netzkunden NC benutzte, optische Faser FC und über eine zweite, zur Übertragung von Daten von dem Netzkunden FC zu dem optischen Netzwerk NW benutzte optische Faser FN verbunden, wobei die in Realität erheblich größere Entfernung zwischen dem Netzknoten ZOE und dem Netzabschlußgerät DOE in Figur 1 durch eine punktierte Linie angedeutet werden soll.

Desweiteren sind im Netzknoten ZOE eine erste optische Sendeeinheit OSTx zur Erzeugung eines optischen Hilfssignals oh und eine erste optische Empfangseinheit OSRx zum Empfang des rückübertragenen, optischen Hilfssignals oh vorgesehen, wobei die optische Empfangseinheit OSRx mit einer Auswerteeinheit AE zur Auswertung des empfangenen, optischen Hilfssignals oh verbunden ist. Zusätzlich sind im Netzknoten zur Einkopplung bzw. Auskopplung des optischen Hilfssignals oh ein erster und ein zweiter wellenlängenselektiver Koppler K1, K2 vorgesehen, wobei der erste wellenlängenselektive Koppler K1 mit der ersten optischen Faser FC und über eine optische Zuleitungfaser OZL mit der ersten optischen Sendeeinheit OSTx und der zweite wellenlängenselektive Koppler K2 mit der zweiten optischen Faser FN und über eine weitere optische Zuleitungfaser OZL mit der ersten optischen Empfangseinrichtung OSRx verbunden ist.

Das Netzabschlußgerät weist ebenfalls einen dritten und einen vierten wellenlängenselektiven Koppler K3, K4 auf, die beispielsweise über eine optische Umlenkfaser UF verbunden sind. Der dritte wellenlängenselektive Koppler K3 ist an die erste optische Faser FC und der vierte wellenlängenselektive Koppler K4 an die zweite optische Faser FN angeschlossen. Desweiteren ist ein Leistungsteiler LT vorgesehen, der mit einer optischen Anzeigeeinheit AZE über eine optische Zuleitungfaser OZL verbunden ist und an den die optische Umlenkfaser UF geführt ist.

Ein vom optischen Netzwerk NW an den optischen Netzknoten ZOE übertragenes erstes optisches Nutzsignal osn wird im optischen Netzknoten ZOE über die erste optische Faser FC zum ersten wellenlängenselektiven Koppler K1 geführt. Mit Hilfe des wellenlängenselektiven Kopplers K1 wird anschließend das optische Hilfssignal oh und das erste optische Nutzsignal osn zu einem ersten optischen Signal osn+oh zusammengekoppelt und über die erste optische Faser FC zum Netzabschlußgerät DOE übertragen. Das im Netzabschlußgerät DOE über die erste optische Faser FC empfangene erste optische Signal osn+oh wird mit Hilfe des dritten wellenlängenselektiven Kopplers K3 entkoppelt und das zurückgewonnene optische Hilfssignal oh über die optische Umlenkfaser UF zum vierten wellenlängenselektiyen Koppler K4 übertragen. Das erste optische Nutzsignal osn hingegen wird weiter über die erste optische Faser FC zum Netzkunden NC übertragen. Weiterhin kann von dem über die optische Umlenkfaser UF geführten, optischen Hilfssignal oh ein Teil der Signalleistung mit Hilfe des Leistungsteilers LT abgeteilt werden und anschließend dem Netzkunden NC über die optische Anzeigeeinheit AZE am Netzabschlußgerät DOE angezeigt werden. Damit wird dem Netzkunden NC ermöglicht, den Betriebszustand der ersten optischen Faser FC am Netzabschlußgerät DOE optisch zu überwachen.

Das vom Netzkunden NC zum Netzabschlußgerät DOE übertragene zweite optische Nutzsignal osk wird im Netzabschlußgerät DOE über die zweite optische Faser FN an den vierten wellenlängenselektiven Koppler K4 geführt. Im vierten wellenlängenselektiven Koppler K4 werden das über die optische Umlenkfaser UF übertragene, umgelenkte optische Hilfssignal oh und das zweite optische Nutzsignal osk zu einem gemeinsamen zweiten optischen Signal osk+oh zusammengekoppelt und über die zweite optische Faser FN vom Netzabschlußgerät DOE zum optischen Netzknoten ZOE übertragen. Mit Hilfe des zweiten wellenlängenselektiven Kopplers K2 wird das optische Hilfssignal oh aus dem zweiten optischen Signal osk+oh gefiltert und über eine optische Zuleitungfaser OZL an die erste optische Empfangseinheit OSRx geführt. Gegebenfalls kann mit Hilfe des zweiten wellenlängenselektiven Kopplers K2 ein Teil des zweiten optischen Nutzsignals osk ausgekoppelt werden und zusätzlich zum ausgekoppelten optischen Hilfssignal oh über eine optische Zuleitungfaser OZL an die erste optische Empfangseinheit OSRx geführt werden. Die durch die erste optische Empfangseinheit OSRx aus dem optischen Hilfssignal oh und gegebenenfalls aus dem zweiten optischen Nutzsignal osk gewonnenen Informationen über den Betriebszustand der ersten und zweiten optischen Faser FC,FN werden der Auswertungseinheit AE angezeigt. Durch die Auswertungseinheit AE wird der Empfang oder das Fehlen des rückübertragenen optischen Hilfssignals oh und des einen zweiten optischen Nutzsignals osk zur Überwachung des Betriebszustands der beiden optischen Fasern FC,FN in der zentralen, optischen Einrichtung ZOE ausgewertet, d.h. durch den Empfang des rückübertragenen optischen Hilfssignals oh bzw. des zweiten optischen Nutzsignals osk in der zentralen optischen Einrichtung ZOE wird ein ordnungsgemäßer bzw. fehlerfreier Betrieb der optischen Fasern FC,FN angezeigt. Desweiteren wird durch Auswertungseinheit AE ein Fehlen bzw. kein Empfang des rückübertragenen optischen Hilfssignals oh und/oder des zweiten optischen Nutzsignals osk in der zentralen optischen Einrichtung ZOE als Faserbruch bzw. als eine Übertragungsstörung in den optischen Fasern FC,FN bewertet. Das nach der Filterung durch den zweiten wellenlängenselektiven Koppler K2 verbleibende zweite optische Nutzsignal osk wird über die zweite optische Faser FN zum optischen Netzwerk NW des volloptischen Kommunikationsnetzes OKN des Netzbetreibers übertragen.

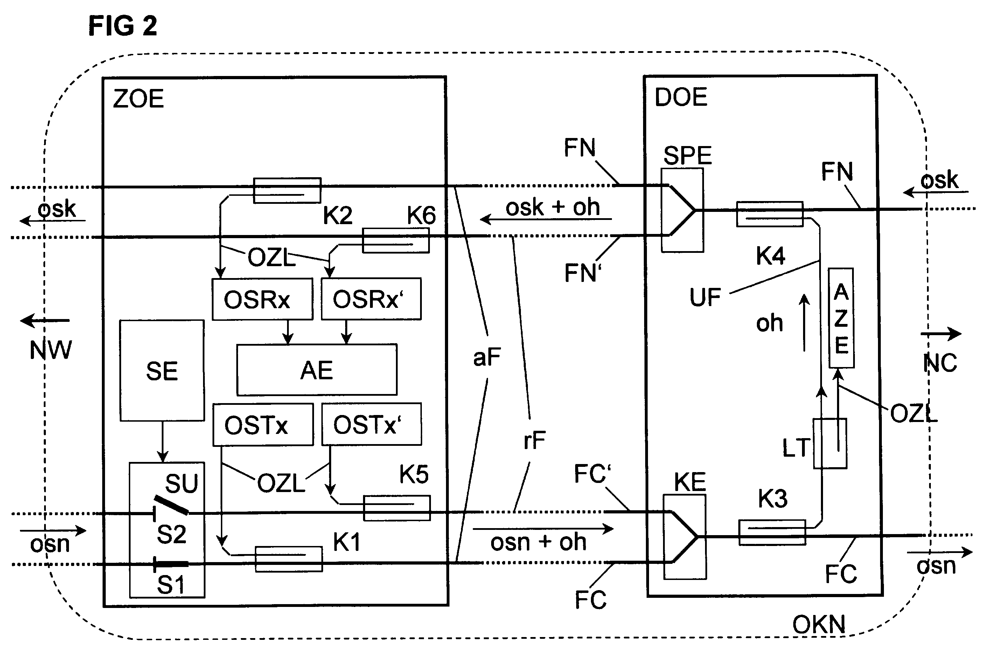

Figur 2 zeigt analog zu Figur 1 schematisch ein volloptisches, fasergebundenes Kommunikationsnetz OKN, wobei zur Verbesserung der Zuverlässigkeit des Anschlusses des Netzkunden NC an das optische Netzwerk NW ein 1+1 Leitungsschutz vorgesehen ist, d.h. es wird sowohl zusätzlich zur ersten optischen Faser FC eine dritte optische Faser FC' als auch zusätzlich zur zweiten optischen Faser FN eine vierte optische Faser FN' für den Anschluß eines Netzkunden NO zur Übertragung desselben ersten oder zweiten optischen Signals (osn+oh, osk+oh) bereitgestellt. Somit kann beim Ausfall bzw. beim Auftreten einer Funktionsstörung auf einer der aktiven optischen Fasern aF - d.h. auf der ersten oder zweiten optischen Faser FC,FN - die jeweilige zugehörige redundante optische Faser rF - d.h. die dritte oder vierte optische Faser FC',FN' - für die weitere Datenübertragung benutzt werden.

Hierzu sind im Vergleich zu der in Figur 1 beschriebenen Anordnung im Netzknoten ZOE zusätzlich eine zweite optische Sendeeinrichtung OSTx' und eine zweite optische Empfangseinrichtung OSRx' vorgesehen, wobei die zweite optische Empfangseinrichtung OSRx' ebenfalls mit der Auswerteeinheit AE verbunden ist. Desweiteren ist der optische Netzknoten ZOE für die Ein- bzw. Auskopplung des optischen Hilfssignals oh auf die dritte bzw. aus der vierten optischen Faser FC', FN' mit einem fünften und einem sechsten wellenlängenselektiven Koppler K5, K6 ausgestattet, wobei die zweite optische Sendeeinheit OSTx' mit dem fünften wellenlängenselektiven Koppler K5 und die zweite optische Empfangseinheit OSRx' mit dem sechsten wellenlängenselektiven Koppler K6 jeweils über eine optische Zuleitungsfaser OZL verbunden ist. In Figur 2 sind beispielhaft eine erste und eine zweite optische Sendeeinrichtung OSTx, OSTx' dargestellt, wobei auch als weitere Realisierungsform zur Erzeugung des optischen Hilfssignals oh und zur Verteilung des optischen Hilfssignals oh auf die aktive und die redundante optische Faser aF, rF die Verwendung der ersten optischen Sendeeinrichtung OSTx und eines zusätzlichen Leistungsteiler, mit dessen Hilfe das erzeugte, optische Hilfssignal oh auf die aktive und die redundante Faser aF,rF verteilt wird, denkbar wäre.

Für die Realisierung des 1+1 Leitungsschutzes sind im optischen Netzknoten ZOE zusätzlich eine Steuereinheit SE und eine einen ersten und zweiten optischen Schalter S1,S2 aufweisende Schalteinheit SU vorgesehen, wobei die Steuerung der Schalteinheit SU mit Hilfe der Steuereinheit SE erfolgt. Der erste bzw. zweite optische Schalter S1,S2 sind für das Zuschalten bzw. Abschalten einer der redundanten bzw. der aktiven optischen Fasern aF,rF vorgesehen und werden über die Schalteinheit SU von der Steuereinheit SE gesteuert.

Desweiteren erfolgt eine Zusammenführung des über die erste und/oder die dritte optische Faser FC,FC' übertragenen ersten optischen Signals osn+oh mit einer zusätzlich im Netzabschlußgerät DOE vorgesehenen Kombinationseinheit KE, die mit dem dritten wellenlängenselektiven Koppler K3 über die erste optische Faser FC verbunden ist. Zusätzlich ist im Netzabschlußgerät DOE eine optische Splittereinheit SPE vorgesehen, mit deren Hilfe das über die zweite optische Faser FN vom Netzkunden NC zum Netzabschlußgerät DOE übertragene, zweite optische Nutzsignal osk und das mit Hilfe des vierten wellenlängenselektiven Kopplers K4 mit dem zweiten optischen Nutzsignal osk verkoppelte, umgelenkte Hilfssignal oh auf die zweite und vierte optische Faser FN,FN' beispielsweise annähernd gleichmäßig verteilt werden. Somit wird das zweite optische Signal osk+oh über die zweite und vierte optische Faser FN,FN' beispielsweise annähernd gleichzeitig übertragen, d.h. trotz einer beispielsweise durch einen Leitungsbruch verursachten Funktionsstörung der zweiten optischen Faser FN liegt im optischen Netzknoten ZOE das über die vierte optische Faser FN'- eine der redundanten optischen Fasern rF - übertragene optische Signal osk+oh vor.

Das vom Netzwerk NW zum Netzkunden NC übertragene erste optische Nutzsignal osn wird bereits redundant über eine aktive und eine redundante optische Faser aF,rF zum optischen Netzknoten ZOE übertragen. Im optischen Netzknoten ZOE wird beispielsweise durch den in der Schalteinheit SU vorgesehenen zweiten optischen Schalter S2 die Zuführung des ersten optischen Nutzsignals osn zur dritten optischen Faser FC' - eine der redundanten Fasern rF - unterbrochen, d.h. vom optischen Netzknoten ZOE zum Netzabschlußgerät DOE wird das erste optische Nutzsignal osn ausschließlich über die erste optische Faser FC übertragen. Tritt nun beim Betrieb der ersten optischen Faser FC eine Funktionsstörung auf, so wird der in Figur 2 offenstehende zweite optische Schalter S2 geschlossen und der erste optische Schalter S1 geöffnet, d.h. die Übertragung des ersten optischen Nutzsignals osn vom optischen Netzknoten ZOE zum Netzabschlußgerät DOE erfolgt im weiteren über die dritte optische Faser FC'. Alternativ können auch mit Hilfe der Schalteinheit SU sowohl die erste als auch di dritte optische Faser FC,FC' für die Datenübertragung beispielsweise gleichzeitig benutzt werden und somit beim Auftreten einer Funktionsstörung die jeweilige optische Faser FC,FC' abgeschaltet werden. Desweiteren wird analog zu dem in Figur 1 dargestellten Ausführungsbeispiel im optischen Netzknoten ZOE das durch die erste bzw. zweite optische Sendeeinrichtung OSTx,OSTx' erzeugte optische Hilfssignal oh mit dem ersten optischen Nutzsignal osn mit Hilfe des ersten bzw. des fünften wellenlängenselektiven Koppler K1,K5 zu einem ersten optischen Signal osn+oh zusammengekoppelt und über die erste bzw. dritte optische Faser FC,FC' zum Netzabschlußgerät DOE übertragen.

Das im Netzabschlußgerät DOE über die erste bzw. dritte optische Faser FC,FC' empfangene erste optische Signal osn+oh wird mit Hilfe der Kombinationseinheit KE auf die im weiteren nur noch bestehende erste optische Faser FC geführt, wobei in Analogie zur ersten Figurenbeschreibung auch hier das optische Hilfssignal oh mit Hilfe des dritten wellenlängenselektiven Kopplers K3 vom ersten optischen Signal osn+oh separiert und über die optische Umlenkfaser UF an den vierten wellenlängenselektiven Koppler K4 geführt wird. Ein Teil des umgelenkten, optischen Hilfssignals oh wird auch hier mit Hilfe des Leistungsteilers LT abgeteilt und mit Hilfe der Anzeigeeinheit AZE dem Netzkunden NC am Netzabschlußgerät DOE angezeigt. Desweiteren wird das umgelenkte, optische Hilfssignal oh und das vom Netzkunden NC zum Netzabschlußgerät DOE über die zweite optische Faser FN übertragene zweite optische Nutzsignal osk durch den vierten optischen wellenlängenselektiven Koppler K4 zu einem zweiten optischen Signal osk+oh zusammengekoppelt, das wiederum über die zweite optische Faser FN zur optischen Splittereinheit SPE geführt wird. Dort wird das zweite optische Signal osk+oh beispielsweise annähernd gleichmäßig auf die zweite und die vierte optische Faser FN,FN' verteilt und anschließend zum optischen Netzknoten ZOE übertragen.

Im optischen Netzknoten ZOE wird sowohl aus dem über die aktive als auch aus dem über die redundante Faser aF, rF übertragenen zweiten optischen Signal osk+oh das rückgeführte optische Hilfssignal oh mit Hilfe des zweiten bzw. sechsten wellenlängenselektiven Kopplers K2,K6 gefiltert und anschließend über die jeweilige optische Zubringerleitung OZL der ersten bzw. zweiten optischen Empfangseinheit OSRx,OSRx' angezeigt. Die durch die erste und die zweite optische Empfangseinheit OSRx, OSRx' aus dem optischen Hilfssignalen oh gewonnenen Informationen über den Betriebszustand der ersten, zweiten, dritten und vierten optischen Faser FC,FC',FN,FN' werden der Auswertungseinheit AE angezeigt. Das nach den Filterungen verbleibende, zweite optische Nutzsignal osk wird über die zweite und die vierte optische Faser FN,FN' redundant vom Netzknoten ZOE zum optischen Netzwerk NW übertragen.

Im Gegensatz zu der Umlenkung des optischen Hilfsignals oh in der dezentralen Einrichtung ZOE mit Hilfe einer optischen Umlenkfaser UF - wie beispielhaft in Figur 1 als auch in Figur 2 dargestellt - könnten für die in Figur 2 dargestellte Realisierung des erfindungsgemäßen Verfahrens mit 1+1 Leitungsschutz auch zwei getrennte optische Umlenkfaser UF sowohl für die aktive als auch für die redundante optische Faser aF, rF im Netzabschlußgerät DOE vorgesehen sein.

Die zur Übertragung der optischen Nutzsignale osn,osk vorgesehen optischen Fasern FC,FC',FN,FN' können beispielsweise in einem bidirektionalen oder einem unidirektionalen Betriebsmodus betrieben werden. Die für den bidirektionalen Betrieb

## Patentansprüche

1. Verfahren zur Überwachung des Betriebes von optischen Fasern (FN,FC) innerhalb eines volloptischen, fasergebundenen Kommunikationsnetzes (OKN), wobei für die Übertragung von optischen Nutzsignalen (osn,osk) zwischen einer zentralen und einer dezentralen, optischen Einrichtung (ZOE,DOE) zumindest zwei optische Fasern (FC,FN) vorgesehen sind,
**dadurch gekennzeichnet**,
- daß ein in der zentralen Einrichtung (ZOE) erzeugtes optisches Hilfssignal (oh) zusammen mit einem ersten optischen Nutzsignal (osn) über eine der optischen Fasern (FC) von der zentralen zur dezentralen optischen Einrichtung (ZOE,DOE) übertragen wird,
- daß das in der dezentralen, optischen Einrichtung (DOE) empfangene, optische Hilfssignal (oh) umgelenkt und über eine weitere der optischen Fasern (FN) zur zentralen, optischen Einrichtung (ZOE) zusätzlich zu einem zweiten optischen Nutzsignal (osk) rückübertragen wird und
- daß der Empfang des rückübertragenen optischen Hilfssignals (oh) in der zentralen, optischen Einrichtung (ZOE) optisch überwacht wird.

2. Verfahren nach Anspruch 1,
**dadurch gekennzeichnet**,
daß zusätzlich zu dem optischen Hilfssignal (oh) das zweite optische Nutzsignal (osk) zur Überwachung des Betriebszustands der beiden optischen Fasern (FC,FN) in der zentralen, optischen Einrichtung (ZOE) ausgewertet wird.

3. Verfahren nach einem der Ansprüche 1 und 2,
**dadurch gekennzeichnet**,
daß zumindest ein Teil des in der dezentralen, optischen Einrichtung (DOE) empfangenen Hilfssignals (oh) abgeteilt wird und die im abgeteilten Hilfssignal (oh) sowie die im zweiten optischen Nutzsignals (osk) enthaltene Faserzustandsinformationen über den Betriebszustands der beiden optischen Fasern (FC,FN) in der dezentralen, optischen Einrichtung (DOE) angezeigt werden.

4. Verfahren nach einem der Ansprüche 1 bis 3,
**dadurch gekennzeichnet**,
daß die Frequenz des optischen Hilfssignals (oh) im optisch sichtbaren Frequenzbereich liegt.

5. Verfahren nach einem der Ansprüche 1 bis 4,
**dadurch gekennzeichnet**,
daß das in der zentralen, optischen Einrichtung (ZOE) erzeugte, optische Hilfssignals (oh) eine Lichtleistungsintensität kleiner zwei Milliwatt aufweist.

6. Verfahren nach einem der Ansprüche 1 bis 5,
**dadurch gekennzeichnet**,
daß in der dezentralen, optischen Einrichtung (DOE) aus dem empfangenen, optischen Signal (osn+oh) mit Hilfe eines ersten wellenlängenselektiven Faserkopplers (K3) das Hilfssignal (oh) ausgekoppelt, anschließend umgelenkt und mit Hilfe eines zweiten Faserkopplers (K4) mit dem zur zentralen optischen Einrichtung (ZOE) zu übertragenden zweiten Nutzsignal (osk) zu einem weiteren optischen Signal (osk+oh) zusammengefaßt und zur zentralen optischen Einrichtung (ZOE) übertragen wird.

7. Verfahren nach einem der Ansprüche 1 bis 6,
**dadurch gekennzeichnet**,
daß die zentrale, optische Einrichtung (ZOE) als Netzknoten und die dezentrale, optische Einrichtung (DOE) als passives Netzabschlußgerät eines volloptischen, fasergebundenen Kommunikationsnetzes (OKN) realisiert ist.

8. Verfahren nach einem der Ansprüche 1 bis 7,
**dadurch gekennzeichnet**,
daß beim Betrieb zumindest zweier aktiver und zumindest zweier redundanter, optischer Fasern (FC,FN,FC',FN') zumindest ein in der zentralen, optischen Einrichtung (ZOE) erzeugtes, optisches Hilfssignal (oh) von der zentralen zur dezentralen, optischen Einrichtung (ZOE,DOE) über zumindest eine der aktiven und/oder zumindest eine der redundanten, optischen Fasern (FC,FC') übertragen wird,
daß das in der dezentralen, optischen Einrichtung (DOE) empfangene zumindest eine optische Hilfssignal (oh) umgelenkt wird und
daß das umgelenkte zumindest eine optische Hilfssignal (oh) über die zugehörige zumindest eine weitere der aktiven und/oder zumindest eine weitere der redundanten, optischen Fasern (FN,FN') zur zentralen, optischen Einrichtung (ZOE) rückübertragen wird.

9. Verfahren nach Anspruch 8,
**dadurch gekennzeichnet**,
daß beim Betrieb von zumindest zwei aktiven und zumindest zwei redundanten, optischen Fasern (FC,FN,FC',FN') in der zentralen optischen Einrichtung (ZOE) zumindest ein optischer Schalter (S1,S2) vorgesehen ist, mit dessen Hilfe eine der optischen Fasern (FC,FC') inaktiv geschaltet wird, und daß in der dezentralen Einrichtung (DOE) zumindest ein optischer Koppler (KE) und zumindest ein optischer Leistungsteiler (SPE) vorgesehen sind, wobei durch den optischen Koppler (KE) das jeweils über die zumindest eine der aktiven und die zumindest eine der redundanten, optischen Fasern (FC,FC') von der zentralen zur dezentralen Einrichtung (ZOE,DOE) übertragene optische Nutzsignal (osn) und das optische Hilfssignal (oh) zu einem optischen Signal (osn+oh) zusammengefaßt werden und durch den optischen Leistungsteiler (SPE) ein über die weitere optische Faser (FN) übertragenes, zweites optisches Nutzsignal (osk) auf zumindest eine weitere der aktiven und zumindest eine weitere der redundanten, optischen Fasern (FN,FN') aufgeteilt und zur zentralen Einrichtung (ZOE) übertragen wird.

10. Verfahren nach einem der Ansprüche 1 bis 9,
**dadurch gekennzeichnet**,
daß für die in der dezentralen, optischen Einrichtung (DOE) durchgeführte Umlenkung des optischen Hilfssignals (oh) zumindest eine zu diesem Zwecke in der dezentralen, optischen Einrichtung zusätzlich installierte optische Faser (UF) vorgesehen ist.

11. Verfahren nach einem der Ansprüche 1 bis 10,
**dadurch gekennzeichnet**,
daß durch den Empfang des rückübertragenen optischen Hilfssignals (oh) und gegebenenfalls des zweiten optischen Nutzsignals (osk) in der zentralen optischen Einrichtung (ZOE) ein fehlerfreier Betrieb der optischen Fasern (FC,FC',FN,FN') angezeigt wird und durch das Fehlen des rückübertragenen optischen Hilfssignals (oh) und/oder des zweiten optischen Nutzsignals (osk) in der zentralen optischen Einrichtung (ZOE) eine Unterbrechung einer der optischen Fasern (FC,FC',FN,FN') angezeigt wird.
